# NOUVEAU FASCICULE DE BREVET EUROPEEN

(11) **EP 1 324 892 B2**
(45) Date de publication et mention de la décision concernant l'opposition: **02.01.2013**
(45) Mention de la délivrance du brevet: 05.09.2007
(21) Numéro de dépôt: 00968000.0
(22) Date de dépôt: 10.10.2000
(51) Int. Cl.: B60J 10/02

(54) **UTILISATION D'UN VITRAGE COMPORTANT UN CORDON PROFILE POUR SON INSTALLATION DANS UNE BAIE**
VERWENDUNG VON VERGLASUNG MIT EINEM PROFILIERTEM BAND ZU SEINER INSTALLATION IN EINER ÖFFNUNG
USE OF A GLAZING COMPRISING A PROFILED STRING RIM FOR ITS INSTALLATION IN A RECESS

(43) Date de publication de la demande: 09.07.2003
(73) Titulaire: SAINT-GOBAIN GLASS FRANCE, 92400 Courbevoie (FR)
(72) Inventeur: LECONTE, Jean-Gérard, F-92400 Courbevoie (FR)
(74) Mandataire: Cardin, Elise
(86) Numéro de dépôt international: PCT/FR2000/002818
(87) Numéro de publication internationale: WO 2002/030696

(56) Documents cités:
- EP-A- 0 157 281
- EP-A- 0 421 833
- EP-A1- 0 024 501
- EP-A1- 0 083 797
- EP-A1- 0 121 480
- EP-A1- 0 121 481
- EP-A1- 0 153 456
- EP-A1- 0 238 890
- EP-A2- 0 298 788
- EP-A2- 0 307 317
- EP-A2- 0 371 810
- EP-A2- 0 421 833
- WO-A1-98/18642
- DE-A1- 3 118 124
- DE-A1- 3 536 806
- DE-A1- 4 326 179
- DE-C- 4 026 205
- DE-C1- 3 545 899
- FR-A- 2 716 416
- US-A- 3 779 794
- US-A- 4 571 278
- US-A- 4 581 276
- US-A- 4 876 132
- US-A- 4 878 850
- US-A- 4 897 853
- US-A- 4 933 032
- US-A- 5 057 265
- US-A- 5 062 248
- US-A- 5 273 704
- US-A- 5 336 349
- US-A- 5 711 119
- US-A- 5 723 196
- DATABASE WWW.VOSA.GOV.UK 07 Mai 2008 VEHICLE & OPERATOR SERVICES AGENCY: 'Toyota Yaris for the date range 01/01/1980 to 01/01/2010'

## Description

L'invention se rapporte au domaine du vitrage, notamment pour les véhicules automobiles, et vise plus particulièrement des vitrages équipés d'éléments décoratifs et/ou fonctionnels rapportés sur le verre. Elle concerne plus spécialement un vitrage, en particulier pour l'installation dans une baie de carrosserie de véhicule, comprenant une feuille de verre avec un cordon profilé qui est fixé au moins sur la surface principale de la feuille de verre faisant face vers l'intérieur à l'état installé. Ce cordon peut comprendre, en tant qu'appendice de recouvrement, une lèvre saillante au-delà du bord du vitrage avec une nervure d'étanchéité pouvant être appliquée contre une partie de paroi adjacente lors de l'installation du vitrage.

Il est connu en général de coller les vitrages de véhicules dans les baies respectives de la carrosserie du véhicule. Pour cela, les vitrages sont souvent pourvus d'un cordon profilé, qui adhère au moins sur leur surface principale faisant face vers l'intérieur, dans l'état installé. Sur le cordon profilé et/ou à proximité de celui-ci, on applique un boudin de colle sur cette même surface principale. Le vitrage pourvu du boudin de colle est ensuite inséré dans la baie. Cette dernière est encadrée d'une bride de montage, sur laquelle le boudin de colle vient s'appliquer. Les vitrages dans l'état installé doivent de préférence se trouver pratiquement en affleurement avec la surface externe de la carrosserie. Pour cela, la bride de montage est renfoncée vis-à-vis de la surface principale de la carrosserie au moyen d'un ressaut coudé périphérique. La hauteur du ressaut coudé correspond à l'épaisseur du vitrage et de la colle. Suivant certaines réalisations, les chants des vitrages ne sont pas couverts par le cordon profilé. Comme les dimensions du vitrage et le pourtour de la baie ne peuvent pas être adaptés l'un à l'autre sans tolérance en raison des variations dimensionnelles de fabrication, il subsiste un espace, en forme de rainure entre le ressaut coudé ou le bord de la baie et le vitrage.

Conformément au document DE-A1-38 18 930, on prévoit, pour recouvrir cet espace, une lèvre qui est formée directement sur le cordon profilé adhérant à la vitre, de préférence par extrusion. Dans une autre variante de réalisation du même document, on colle, le long de la surface périphérique de la vitre, sur la surface principale faisant face vers l'intérieur, une bande profilée supplémentaire en un plastique élastomère flexible. Celle-ci présente une portion tubulaire, qui remplit ledit espace dans l'état monté du vitrage.

On connaît également une forme de profilé (DE-A1-43 01 026), qui entoure sur trois côtés le bord externe et le chant de la vitre dans une forme de réalisation, c'est-à-dire également sur la surface principale externe, et qui comprend en outre une lèvre faisant saillie depuis le vitrage, et servant de recouvrement de fente latérale.

FR 2 716 416 divulgue un vitrage et l'utilisation d'un vitrage selon le préambule des revendications 15 et 1.

Des matériaux thermoplastiques, de préférence des élastomères thermoplastiques (TPE) ou des oléfines thermoplastiques (TPO) ont été principalement utilisés jusqu'à présent en tant que matériau pour de tels profilés. Avec ceux-ci, la lèvre peut être fabriquée de manière suffisamment mince déjà au stade de l'extrusion, afin de pouvoir être fléchie élastiquement contre le bord de la baie lors de l'installation du vitrage dans la carrosserie sans générer de forces de réaction trop élevées lors du montage. En plus de sa fonction d'étanchéification, la lèvre centre le vitrage dans la baie lors de l'insertion et maintient le vitrage centré.

Or, des salissures peuvent encore s'accumuler dans l'espace ainsi recouvert par la lèvre repliée, et ne peuvent être éliminées que difficilement du fond de la rainure. L'espace qui subsiste ainsi est en effet généralement supérieur à 7 millimètres et laisse le passage à de nombreuses salissures.

L'invention a pour but un nouveau type de montage d'un vitrage comportant un cordon profilé évitant les inconvénients précités et ne nécessitant aucun joint de finition devant recouvrir une partie du vitrage.

Ce but a été atteint selon l'invention par un vitrage selon la revendication 15 et l'utilisation d'un vitrage selon la revendication 1. Ce vitrage, est prévu en particulier pour être installé par collage dans une baie d'une carrosserie de véhicule, comprenant une feuille de verre avec un cordon profilé qui est fixé au moins sur la surface principale de la feuille de verre faisant face vers l'intérieur à l'état installé, et qui prend appui sur au moins une partie de la baie, l'espace visible après installation, entre la baie et le chant du vitrage étant inférieur à 5 millimètres, et de préférence inférieur à 3 millimètres.

Par "chant du vitrage", on entend soit le chant de la vitre elle-même ou, si le cordon profilé recouvre celui-ci, la portion de cordon correspondante. Le cordon profilé selon l'invention peut être un élément continu ou discontinu, et il peut être un élément simple ou multiple, c'est-à-dire constitué d'au moins deux parties sensiblement parallèles déposées à la périphérie de la feuille de verre.

L'invention permet ainsi d'obtenir une obturation en affleurement avec la surface principale de la vitre et avec la surface de paroi ou de carrosserie adjacente. En plus des avantages techniques, on obtient ainsi visuellement une surface quasi-fermée. Les avantages techniques sont essentiellement le fait de réduire l'espace visible entre la baie de carrosserie et le vitrage et de prévenir tous risques d'encrassement de ladite zone.

La réalisation selon l'invention a été rendue possible par un choix des inventeurs d'aller à l'encontre des précautions habituellement prises ; en effet les inventeurs ont choisi de réduire l'espace entre le vitrage et la baie et ont su mettre en évidence que la technique selon l'invention est acceptable et ne présente pas de risques d'endommagement du vitrage contrairement aux idées de l'homme du métier.

Selon une réalisation avantageuse de l'invention, le profilé est prévu pour limiter l'expansion notamment latérale d'un cordon de collage. La forme du cordon profilé est ainsi avantageusement prévue pour éviter que la colle qui va servir à fixer le vitrage dans la baie de carrosserie ne s'étale trop et vienne perturber la zone de vision du vitrage. Cette forme permet en outre avantageusement de définir l'espacement entre le vitrage et le fond de la baie de carrosserie et donc de permettre un positionnement prédéterminé selon au moins une direction. La forme du cordon ainsi défini va également permettre de prédéterminer la quantité de colle nécessaire pour fixer le vitrage et donc garantir une bonne fixation du vitrage et faciliter l'automatisation des opérations.

Selon une première variante de réalisation de l'invention, le cordon de collage recouvre au moins partiellement le cordon profilé. Selon cette variante de réalisation et notamment en fonction de la nature du cordon profilé et de la nature du cordon de collage, la fixation du vitrage est renforcée par la liaison desdits deux cordons. Dans un mode de réalisation selon cette variante, le cordon de collage est intégralement déposé sur le cordon profilé et leur liaison est donc directement liée à la fixation du vitrage. Avantageusement, l'invention prévoit dans ce dernier cas de combiner pour la liaison entre les deux cordons des forces de collage et des forces d'accrochage mécanique ; pour ce faire le cordon profilé comporte de préférence des saillies d'ancrage. Ces saillies reçoivent le cordon de colle qui après durcissement se trouve retenu mécaniquement. Avantageusement encore dans un tel cas, l'invention prévoit de n'obtenir aucune adhésion entre les deux cordons ; une telle réalisation peut permettre de faciliter le démontage du vitrage en cas de besoin. En effet, si la liaison mécanique entre les deux cordons est du type emboîtement, un démontage est alors aisé.

Dans d'autres cas où le cordon de collage recouvre au moins partiellement le cordon profilé et notamment lorsque la feuille de verre comporte au moins deux côtés présentant des courbures avec des petits rayons de courbure, le cordon profilé est réalisé avec une pente telle que sa surface présente une inclinaison descendante depuis son bord orienté vers le centre du vitrage vers son autre bord positionné au bord de la feuille de verre. Une telle réalisation s'applique plus particulièrement à des pare-brise ou lunettes arrières dont les angles d'accostages latéraux sont faibles. Ce type de réalisation va permettre de faciliter la dépose ultérieure du cordon de collage à l'aide d'un robot ; en effet, cette pente du cordon profilé par rapport au plan du vitrage dans cette zone permet de redresser le plan de dépose du cordon de collage en direction de l'horizontale lorsque le vitrage repose sur son centre du côté convexe.

Selon une autre variante de réalisation de l'invention, le cordon de collage ne recouvre aucunement le cordon profilé. Le seul contact entre les deux cordons est alors éventuellement lié au fait que le cordon profilé peut être prévu pour limiter l'expansion latérale du cordon de collage.

Selon une réalisation préférée de l'invention, le cordon profilé comporte sur au moins une partie de sa longueur une lèvre saillante au-delà du bord du vitrage. Une telle lèvre est avantageusement réalisée déformable ou souple. Ces particularités lui confèrent des propriétés mécaniques qui vont permettre à ladite lèvre de remplir différentes fonctions. Tout d'abord, lorsque la lèvre existe sur tout ou partie d'au moins deux côtés du vitrage, elle va servir d'outil de centrage pour bien positionner le vitrage dans la baie de la carrosserie. Par exemple encore, dans le cas où la lèvre est prévue sur la partie supérieure du vitrage sur tout ou partie de la longueur du profilé et lorsque le bas du vitrage repose sur des butées, ladite lèvre peut fournir une force de réaction vis à vis de la baie de carrosserie en regard qui garantit un espace défini entre la baie de carrosserie et le vitrage. En outre, la lèvre prévient tous risques de contact entre la feuille de verre et la carrosserie et donc tous risques d'endommagement de la feuille de verre.

La lèvre ainsi réalisée peut également avoir une fonction d'étanchéité entre la baie et le vitrage ; en effet, la lèvre va se plier dans un sens ou dans l'autre selon les choix et vient en appui sur la baie. La pression ainsi exercée est suffisante pour garantir une bonne étanchéité. Pour cette fonction, la lèvre est avantageusement prévue sur au moins trois côtés du vitrage ; sa présence n'est effectivement pas indispensable sur la partie basse du vitrage lorsque celui-ci est installé.

Selon un mode de réalisation avantageux de l'invention, il est prévu d'incorporer un fil solide dans le cordon de collage ou dans le cordon profilé. Ce fil a pour but de faciliter le démontage du vitrage en cas de besoin et notamment pour faciliter le recyclage des matériaux.

Un tel cordon est par exemple inséré dans ou sous le cordon de collage au moment ou celui-ci est réalisé en prenant garde de laisser dépasser au moins une extrémité de ce fil. Il sera ainsi possible lorsque le vitrage est en place de saisir cette extrémité, éventuellement à l'aide d'un outil, puis en tirant sur le fil, éventuellement encore à l'aide d'un outil, pour rompre le cordon de collage.

Un tel dispositif permettant de rompre le cordon de collage ou le cordon profilé est quasi indispensable dans le cadre de l'invention si l'on souhaite démonter le vitrage. En effet, l'espace visible entre le vitrage et la baie de carrosserie inférieur à 5 millimètres n'autorise pas le passage d'un outil de découpe et en tout état de cause sa manipulation. En effet, seul le cas évoqué précédemment, selon lequel la liaison entre le vitrage et la carrosserie est de nature uniquement mécanique lorsque le cordon profilé comporte des saillies d'ancrage, pourrait permettre un démontage du vitrage ne nécessitant pas un tel dispositif tel qu'un fil de découpe. Toutefois, il faut noter que la combinaison d'un tel fil avec ce montage ne présentant que des moyens de retenue mécanique est envisagée par L'invention ; dans ce cas il ne s'agit plus réellement d'un fil de découpe mais d'un fil qui permet d'apporter une aide au désemboîtement du cordon de colle et du cordon profilé.

Selon un autre mode avantageux de réalisation de l'invention, au moins deux fils sont incorporés dans le cordon de colle ou le cordon profilé. Les fils sont alors de préférence positionnés à distance l'un de l'autre de sorte que chacun d'eux n'ait à fendre qu'une partie du cordon de colle. Les forces nécessaires pour effectuer cette opération sont alors réduites.

Des moyens notamment pour réaliser la mise en place de tels fils sont par exemple décrits dans les demandes de brevet EP-A-0 121 480 et EP-A- 0298 788.

Toujours selon ce même principe d'incorporation d'un élément dans le cordon de collage ou dans le cordon profilé ou encore au moins de l'incorporation d'un élément entre le cordon profilé et le cordon de collage, l'invention prévoit avantageusement de mettre en place une gaine au sein de laquelle peut ensuite être introduit un autre élément. Il peut alors s'agir d'un fil de découpe ou bien d'un autre type d'élément présentant une autre fonctionnalité.

Une réalisation avantageuse de l'invention prévoit un cordon profilé réalisé en un matériau bi-composant. Il s'agit par exemple d'un polyuréthanne. Le choix d'un tel matériau présente l'avantage de pouvoir présenter une excellente compatibilité avec la colle qui sera utilisée, celle-ci pouvant facilement être choisie d'une nature voisine.

Une autre réalisation selon l'invention prévoit de réaliser le cordon profilé en un matériau thermoplastique. Un tel matériau présente notamment l'avantage d'un recyclage aisé qui est souvent une exigence requise. Concernant sa compatibilité avec la colle, celle-ci n'est pas toujours simple à obtenir. Lorsque cela s'avère nécessaire, notamment lorsque le cordon de collage recouvre au moins partiellement le cordon profilé réalisé avec un matériau thermoplastique, la surface de dernier est alors avantageusement enduite d'un primaire d'adhésion au préalable.

Dans l'un ou l'autre de ces cas les moyens de réalisation du cordon profilé sont divers.

Selon un premier type de réalisation, l'invention prévoit avantageusement d'obtenir le cordon profilé directement par extrusion sur la surface de la feuille de verre. Avantageusement dans le cas d'un profilé réalisé en un matériau thermoplastique, le dispositif d'extrusion et notamment les conduites et la tête d'extrusion est chauffé.

Dans une variante de réalisation, le cordon profilé et le cordon de collage sont co-extrudés directement sur la feuille de verre avec un cordon de collage qui reste plastiquement déformable et adhésif jusqu'à la mise en place du vitrage dans la baie de carrosserie.

Selon un, second type de réalisation de l'invention, le cordon profilé est fabriqué au préalable, par exemple par extrusion, et est fixé ultérieurement sur la feuille de verre, par exemple par collage. Un tel profilé est par exemple fabriqué par extrusion avec une longueur importante et est ensuite découpé à la longueur requise pour un vitrage donné et fixé sur celui-ci. Pour le fixer, il est possible de le coller par exemple en prévoyant un profilé perforé, la colle pouvant traverser les trous et venir au contact de la feuille de verre et ainsi solidement fixer le profilé.

Selon une dernière réalisation de l'invention, le profilé est obtenu selon une technique d'encapsulation.

Selon l'une ou l'autre de ces techniques d'obtention du cordon profilé, ledit cordon profilé est réalisé sur la face interne du vitrage, lorsque celui-ci est fixé dans la baie de carrosserie, mais il peut encore couvrir une partie du chant du vitrage de verre et/ou couvrir une partie de la face externe du vitrage.

Le cordon profilé et/ou le cordon de collage peuvent être au contact direct du verre ou au contact d'une couche opaque, telle qu'un revêtement émaillé, elle-même déposée sur le verre.

Concernant le vitrage, celui-ci est constitué d'au moins une feuille de verre et il peut donc être constitué d'un vitrage feuilleté.

L'invention propose encore un vitrage constitué notamment d'une feuille de verre comportant un cordon profilé et notamment destiné à être fixé par collage dans une baie de carrosserie, qui peut notamment permettre une utilisation telle que décrite précédemment et être fixé de sorte que l'espace visible après montage entre le vitrage et la baie de carrosserie soit inférieur à 5 millimètres.

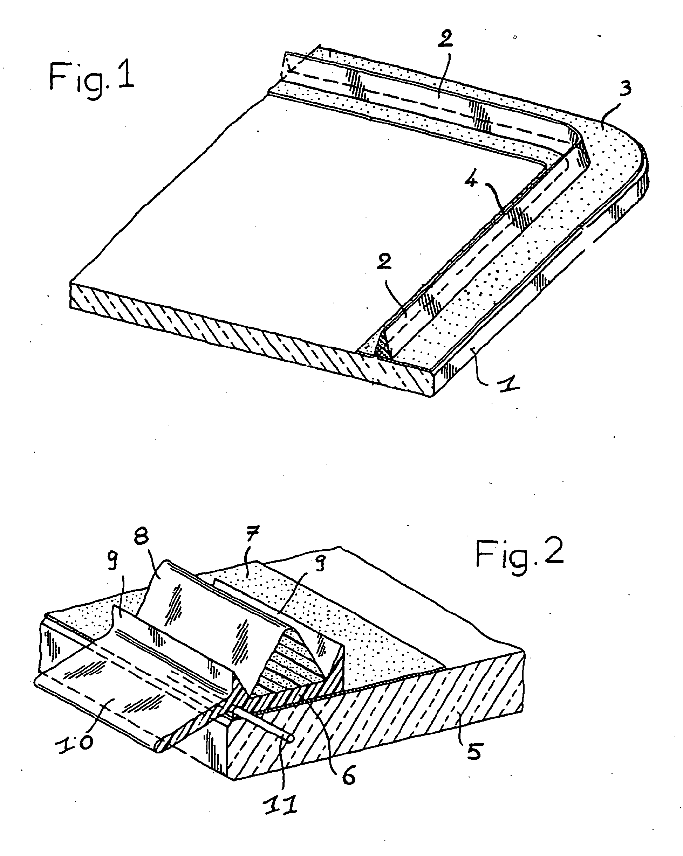

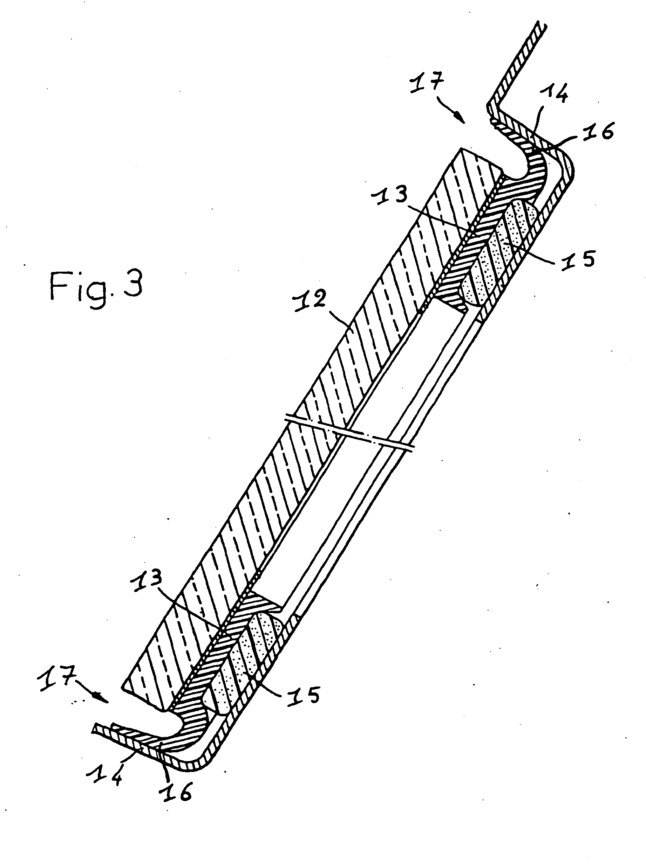

D'autres détails et caractéristiques avantageux de l'invention ressortiront ci-après des exemples de réalisation de l'invention en référence aux figures 1 à 3 qui représentent :
➢ figure 1, un schéma illustrant un vitrage,
➢ figure 2, un schéma illustrant un autre vitrage pour une réalisation selon l' invention,
➢ figure 3, un schéma d'une réalisation selon l'invention utilisant un autre vitrage.

Sur la figure 1 est représenté un vitrage constitué d'une feuille de verre 1 pourvue d'un cordon profilé 2 adhérant près de son bord sur l'une de ses surfaces principales, qui sera la surface intérieure après installation du vitrage dans une baie de carrosserie.

Le cordon profilé 2 peut être déposé directement sur la surface de la feuille de verre 1, ou, comme illustré ici, sur un revêtement 3, tel qu'une couche émaillée déposée par sérigraphie. Le cordon profilé 2 est déposé de préférence par extrusion ou par un autre procédé tel que surmoulage ou encapsulation, collage d'un cordon préfabriqué, etc. Il se compose d'un matériau thermoplastique, de préférence d'un élastomère ou mélange d'élastomères thermoplastiques (TPE) ou d'oléfine(s) thermoplastique(s) (TPO). Il peut encore s'agir d'un matériau bi-composant tel qu'un polyuréthanne.

La feuille de verre 1 peut être constituée de verre ou d'un plastique transparent, et peut être réalisée de manière monolithique ou - différemment de l'illustration - avec une structure feuilletée associant au moins deux feuilles de verre et/ou plastique transparent.

Le cordon profilé 2 comprend essentiellement un profil de base reposant sur une surface principale de la feuille de verre. Celui-ci fait saillie sensiblement à angle droit depuis la surface de la feuille de verre 1 et forme, à son extrémité libre, une nervure d'appui 4. Celle-ci se trouve dans la position d'installation, contre une bride de montage d'une baie de carrosserie et définira lors du montage la position du vitrage dans la baie de carrosserie en termes de profondeur d'encastrement dans ladite baie.

Dans la réalisation représentée, le cordon profilé 2 adhère seulement sur la surface principale de la feuille de verre 1 destinée à être tournée vers l'intérieur. En variante, il peut recouvrir deux ou trois faces de la feuille de verre à savoir une surface principale et au moins une partie du chant de ladite feuille de verre, ou respectivement les deux surfaces principales et le chant de la feuille de verre en chevauchant le bord de cette dernière.

La figure 2 illustre un autre type de vitrage constitué comme précédemment d'une feuille de verre 5 mais qui comme déjà dit pourrait être une feuille de plastique ou un vitrage feuilleté. Un cordon profilé 6 réalisé selon une des méthodes précédemment évoquées en un des matériaux cité est fixé sur la feuille de verre 5 ou plus exactement sur une couche opaque 7, elle-même déposée sur à la périphérie de la feuille de verre 5.

Sur cette figure 2, est également représenté le cordon de collage 8 qui est déposé sur le profilé 6. Ce cordon de collage pourrait selon d'autres types de réalisation être déposé directement sur la feuille de verre 5 ou la couche opaque 7, ou bien encore recouvrir partiellement le cordon profilé 6. Ce cordon de collage 8 est déposé entre deux nervures d'appui 9 qui vont limiter l'expansion de la colle de part et d'autre, et définir la distance séparant le fond de la baie de carrosserie du vitrage.

Le cordon profilé 6 comporte en outre une lèvre 10 saillante au-delà du bord du vitrage.

La lèvre 10 formée d'une seule pièce fait saillie depuis le profil de base 6 avec un certain angle par rapport à l'extension principale de ce dernier, éventuellement sensiblement parallèle à la surface principale de la feuille de verre, à peu près à mi-hauteur entre la feuille de verre 5 et les nervures d'appui 9 et s'étend au-delà du contour de la feuille de verre 5.

La lèvre 10, dans cette configuration, peut avoir différentes fonctions. Elle forme avantageusement une partie du cordon profilé 6 élastiquement déformable. La lèvre 10 peut ainsi être déformée lors de l'installation dans la baie de carrosserie et agir en tant qu'élément centreur. Elle a bien entendu en outre une fonction de protection de la feuille de verre 5 car elle prévient tous contacts violents entre ladite feuille de verre et les parties métalliques de la baie de carrosserie. En outre, la lèvre 10 peut également avoir une fonction d'étanchéité car elle est appliquée avec une forte pression contre la baie de carrosserie ; sa déformation peut tout au moins permettre de former des canaux d'évacuation de l'eau de pluie ou de lavage. Il sera revenu sur les fonctions de cette lèvre lors de la description de la figure 3.

Sur la figure 2, est encore représenté un fil de découpe 11 incorporé dans le profilé 6. Un tel fil pourrait encore être mis en place dans le cordon de collage ou entre les deux cordons. Au moins une extrémité doit être laissée libre de sorte qu'après montage, elle puisse être saisie par un opérateur, éventuellement à l'aide d'un outil. Une force de traction peut ensuite permettre de découper soit le cordon de collage 8 soit le cordon profilé 6 comme dans le cas de la figure 2.

La figure 3 illustre schématiquement une réalisation selon l'invention du montage d'un vitrage 12 comportant un cordon profilé 13 dans une baie de carrosserie 14, à l'aide d'un cordon de collage 15. On reconnaît ici, outre un vitrage 12 et un cordon profilé 13, également le bord d'une baie 14 d'une carrosserie non illustrée davantage. Le vitrage 12 est raccordée par adhésion au montant de carrosserie 14 au moyen d'un cordon de colle 15 appliqué sur le cordon profilé 13. On observe encore des lèvres 16 qui prolongent le cordon profilé 13 de manière saillante au-delà du bord du vitrage 12 dans leur état déformé. La figure 3 montre ainsi clairement les différentes fonctions que peut avoir la lèvre, et notamment des fonctions de centrage, d'étanchéité, d'évacuation des eaux.

Dans cet état monté, la surface principale externe du vitrage 12 est pratiquement en affleurement avec la surface externe de la carrosserie. En outre, selon l'invention, l'espace visible 17 entre la baie de carrosserie et le vitrage présente une dimension inférieure à 5 millimètres.

Par rapport aux configurations antérieures de montage de tels vitrages on obtient ici un espace entre le vitrage et la baie de carrosserie qui permet d'éviter la présence de salissures. En outre, il est apparu que la réduction dudit espace permet également de réduire les bruits aérodynamiques. Un autre avantage de la réalisation selon l'invention est de conférer un aspect visuel et esthétique tout à fait particulier car pour un observateur placé à une distance relativement réduite du véhicule comportant ce montage, le vitrage semble prolonger la carrosserie sans interruption.

La description détaillée qui vient d'être donnée concerne plus particulièrement un vitrage muni par extrusion d'un cordon profilé adhérant à une surface principale.

Les mêmes enseignements s'appliquent à des profilés obtenus par d'autres techniques (encapsulation ou collage) et/ou recouvrant plus d'une face de la vitre.

## Revendications

1. Utilisation d'un vitrage pour l'installation par collage dans une baie de carrosserie de véhicule de manière affleurante à la carrosserie, comprenant une feuille de verre avec un cordon profilé qui est fixé au moins sur la surface principale de la feuille de verre faisant face vers l'intérieur à l'état installé, et qui prend appui sur au moins une partie de la baie, l'espace visible, après installation, entre la baie et le chant du vitrage étant inférieur à 5 mm le cordon profilé comportant sur au moins une partie de sa longueur une lèvre saillante au-delà du bord du vitrage, **caractérisée en ce que** cette lèvre est prévue sur au moins deux côtés du vitrage pour servir d'outil de centrage pour bien positionner le vitrage dans la baie de la carrosserie, mais n'est pas prévue sur la partie basse du vitrage lorsque celui-ci est installé.

2. Utilisation d'un vitrage selon la revendication 1, **caractérisée en ce que** le cordon profilé limite l'expansion latérale d'un cordon de collage.

3. Utilisation d'un vitrage selon la revendication 1 ou 2, **caractérisée en ce que** le cordon profilé est au moins partiellement recouvert par un cordon de collage.

4. Utilisation d'un vitrage selon la revendication 3, **caractérisée en ce que** le cordon profilé présente une pente par rapport au plan du vitrage dans la zone où ledit cordon est fixé.

5. Utilisation d'un vitrage selon la revendication 3 ou 4, **caractérisée en ce que** le cordon profilé comporte des saillies d'ancrage.

6. Utilisation d'un vitrage selon l'une quelconque des revendications précédentes, **caractérisée en ce que** un fil solide, servant si nécessaire de fil de découpe, est incorporé dans le cordon de collage ou dans le cordon profilé.

7. Utilisation d'un vitrage selon la revendication 6, **caractérisée en ce qu'**au moins deux fils de découpe sont incorporés dans le cordon de collage ou dans le cordon profilé.

8. Utilisation d'un vitrage selon l'une des revendications précédentes, **caractérisée en ce qu'**au moins une gaine est incorporée dans le cordon de collage ou dans le cordon profilé.

9. Utilisation d'un vitrage selon l'une des revendications précédentes, **caractérisée en ce que** le cordon profilé est réalisé en un matériau bi-composant.

10. Utilisation d'un vitrage selon l'une des revendications 1 à 8, **caractérisée en ce que** le cordon profilé est réalisé en un matériau thermoplastique.

11. Utilisation d'un vitrage selon l'une des revendications précédentes, **caractérisée en ce que** le cordon profilé est obtenu directement par extrusion sur la surface de la feuille de verre.

12. Utilisation d'un vitrage selon l'une des revendications précédentes, **caractérisée en ce que** le cordon profilé et le cordon de collage sont co-extrudés directement sur la feuille de verre, et **en ce qu'**au moins le cordon de collage reste plastiquement déformable et adhésif jusqu'à la mise en place du vitrage dans la baie de carrosserie.

13. Utilisation d'un vitrage selon l'une des revendications 1 à 10, **caractérisée en ce que** le cordon profilé est fabriqué au préalable et fixé ultérieurement sur la feuille de verre, par exemple par collage.

14. Utilisation d'un vitrage selon l'une des revendications 1 à 10, **caractérisée en ce que** le cordon profilé est obtenu selon une technique d'encapsulation.

15. Vitrage, fixé par collage dans une baie de carrosserie et positionné de manière affleurante à la carrosserie en ne laissant subsister qu'un espace visible entre le vitrage et la carrosserie inférieur à 5 millimètres, comprenant une feuille de verre avec un cordon profilé qui est fixé au moins sur la surface principale de la feuille de verre faisant face vers l'intérieur à l'état installé, le cordon profilé comportant sur au moins une partie de sa longueur une lèvre saillante au-delà du bord du vitrage, **caractérisée en ce que** cette lèvre est prévue sur au moins deux côtés du vitrage pour servir d'outil de centrage pour bien positionner le vitrage dans la baie de la carrosserie, mais n'est pas prévue sur la partie basse du vitrage lorsque celui-ci est installé.

16. Vitrage selon la revendication 15, **caractérisé en ce que** le cordon profilé coopère pour la fixation du vitrage avec un cordon de collage, les deux cordons étant superposés, se chevauchant partiellement ou étant adjacents.

17. Vitrage selon la revendication 15 ou 16, **caractérisé en ce que** le cordon profilé comporte au moins une partie possède une orientation sensiblement perpendiculaire au plan du vitrage dans cette zone pour limiter l'expansion latérale d'un cordon de collage.

18. Vitrage selon l'une des revendications 15 à 17, **caractérisé en ce que** le cordon profilé est prévu pour être au moins partiellement recouvert par un cordon de collage.

19. Vitrage selon la revendication 18, **caractérisée en ce que** le cordon profilé présente une pente par rapport au plan du vitrage dans la zone où ledit cordon est fixé.

20. Vitrage selon la revendication 18 ou 19, **caractérisé en ce que** le cordon profilé comporte des saillies d'ancrage.

21. Vitrage selon l'une quelconque des revendications 15 à 20, **caractérisé en ce que** sur au moins une partie du profilé sur au moins un côté du vitrage, la lèvre possède une rigidité telle qu'elle peut exercer une force de réaction vis à vis de la baie de carrosserie lors du montage dudit vitrage dans ladite baie.

22. Vitrage selon l'une quelconque des revendications 15 à 21, **caractérisé en ce que** un fil solide, servant si nécessaire de fil de découpe, est incorporé dans ou sur le cordon profilé.

23. Vitrage selon la revendication 22, **caractérisé en ce qu'**au moins deux fils de découpe sont incorporés dans ou sur le cordon profilé.

24. Vitrage selon l'une des revendications 15 à 23, **caractérisé en ce qu'**au moins une gaine est incorporée dans ou sur le cordon profilé.

25. Vitrage selon l'une des revendications 15 à 24, **caractérisé en ce que** le cordon profilé est réalisé en un matériau bi-composant.

26. Vitrage selon l'une des revendications 15 à 24, **caractérisé en ce que** le cordon profilé est réalisé en un matériau thermoplastique.

27. Vitrage selon l'une des revendications 15 à 26, **caractérisé en ce que** le cordon profilé est obtenu directement par extrusion sur la surface de la feuille de verre.

28. Vitrage selon l'une des revendications 15 à 27, **caractérisé en ce que** le cordon profilé et un cordon de collage sont co-extrudés directement sur la feuille de verre, et **en ce qu'**au moins le cordon de collage reste plastiquement déformable et adhésif jusqu'à la mise en place du vitrage dans la baie de carrosserie.

29. Vitrage selon l'une des revendications 15 à 26, **caractérisé en ce que** le cordon profilé est fabriqué au préalable et fixé ultérieurement sur la feuille de verre, par exemple par collage.

30. Vitrage selon l'une des revendications 15 à 26, **caractérisé en ce que** le cordon profilé est obtenu selon une technique d'encapsulation.

## Claims

1. The use of a window glass, for installation by adhesive bonding in an opening of a vehicle bodywork so that it lies flush with the bodywork, comprising a sheet of glass with a profiled bead which is fixed at least to the main surface of the sheet of glass facing toward the interior in the installed state and which rests against at least part of the opening, the space visible, after installation, between the opening and the edge face of the window glass being less than 5 mm, the profiled bead having, over at least part of its length, a lip which projects beyond the edge of the window glass, **characterized in that** this lip is provided along at least two sides of the window glass for acting as a centering tool for positioning the window glass correctly in the bodywork opening, but is not present on the bottom part of the window glass when the latter is installed.

2. The use of a window glass as claimed in claim 1, **characterized in that** the profiled bead limits the lateral expansion of a bead of adhesive.

3. The use of a window glass as claimed in claim 1 or 2, **characterized in that** the profiled bead is at least partially covered by a bead of adhesive.

4. The use of a window glass as claimed in claim 3, **characterized in that** the profiled bead has a slope with respect to the plane of the window glass in the region where said bead is fixed.

5. The use of a window glass as claimed in claim 3 or 4, **characterized in that** the profiled bead has anchoring projections.

6. The use of a window glass as claimed in any of the preceding claims, **characterized in that** a solid wire, used if necessary as a cutting wire, is incorporated into the bead of adhesive or into the profiled bead.

7. The use of a window glass as claimed in claim 6, **characterized in that** at least two cutting wires are incorporated into the bead of adhesive or into the profiled bead.

8. The use of a window glass as claimed in one of the preceding claims, **characterized in that** at least one sheath is incorporated into the bead of adhesive or into the profiled bead.

9. The use of a window glass as claimed in one of the preceding claims, **characterized in that** the profiled bead is made of a two-part material.

10. The use of a window glass as claimed in one of claims 1 to 8, **characterized in that** the profiled bead is made of a thermosplastic.

11. The use of a window glass as claimed in one of the preceding claims, **characterized in that** the profiled bead is obtained directly by extrusion onto the surface of the sheet of glass.

12. The use of a window glass as claimed in one of the preceding claims, **characterized in that** the profiled bead and the bead of adhesive are co-extruded directly onto the sheet of glass and **in that** at least the bead of adhesive remains plastically deformable and adhesive until the window glass is fitted into the bodywork opening.

13. The use of a window glass as claimed in one of claims 1 to 10, **characterized in that** the profiled bead is manufactured beforehand and fixed to the sheet of glass later, for example by adhesive bonding.

14. The use of a window glass as claimed in one of claims 1 to 10, **characterized in that** the profiled bead is obtained using an encapsulation technique.

15. A window glass, fixed by adhesive bonding into a bodywork opening and positioned so that it lies flush with the bodywork, leaving only a visible space between the window glass and the bodywork less than 5 millimeters, comprising a sheet of glass with a profiled bead which is fixed at least to the main surface of the sheet of glass facing toward the interior in the installed state, the profiled bead having, over at least part of its length, a lip which projects beyond the edge of the window glass, **characterized in that** this lip is provided along at least two sides of the window glass for acting as a centering tool for positioning the window glass correctly in the bodywork opening, but is not present on the bottom part of the window glass when the latter is installed.

16. The window glass as claimed in claim 15, **characterized in that** the profiled bead collaborates, for securing the window glass, with a bead of adhesive, the two beads being superposed, partially overlapping, or being adjacent.

17. The window glass as claimed in claim 15 or 16, **characterized in that** the profiled bead comprises at least a part has an orientation practically perpendicular to the plane of the window glass in this region to limit the lateral expansion of a bead of adhesive.

18. The window glass as claimed in one of claims 15 to 17, **characterized in that** the profiled bead is designed to be at least partially covered by a bead of adhesive.

19. The window glass as claimed in claim 18, **characterized in that** the profiled bead has a slope with respect to the plane of the window glass in the region where said bead is fixed.

20. The window glass as claimed in claim 18 or 19, **characterized in that** the profiled bead has anchoring projections.

21. The window glass as claimed in any of claims 15 to 20, **characterized in that** over at least part of the profile on at least one side of the window glass, the lip has a rigidity such that it can extert a reactive force against the bodywork opening when said window glass is being mounted in said opening.

22. The window glass as claimed in any of claims 15 to 21, **characterized in that** a solid wire, used if necessary as a cutting wire, is incorporated into or onto the profiled bead.

23. The window glass as claimed in claim 22, **characterized in that** at least two cutting wires are incorporated into or onto the profiled bead.

24. The window glass as claimed in one of claims 15 to 23, **characterized in that** at least one sheath is incorporated into or onto the profiled bead.

25. The window glass as claimed in one of claims 15 to 24, **characterized in that** the profiled bead is made of a two-part material.

26. The window glass as claimed in one of claims 15 to 24, **characterized in that** the profiled bead is made of a thermosplastic.

27. The window glass as claimed in one of claims 15 to 26, **characterized in that** the profiled bead is obtained directly by extrusion onto the surface of the sheet of glass.

28. The window glass as claimed in one of claims 15 to 27, **characterized in that** the profiled bead and a bead of adhesive are co-extruded directly onto the sheet of glass and **in that** at least the bead of adhesive remains plastically deformable and adhesive until the window glass is fitted into the bodywork opening.

29. The window glass as claimed in one of claims 15 to 26, **characterized in that** the profiled bead is manufactured beforehand and fixed to the sheet of glass later, for example by adhesive bonding.

30. The window glass as claimed in one of claims 15 to 26, **characterized in that** the profiled bead is obtained using an encapsulation technique.

## Patentansprüche

1. Verwendung einer Verglasung für den mit der Karosserie bündig abschlißendend Einbau durch Kleben in eine Fahrzeugkarosserieöffnung, welche eine Glasscheibe mit einer Profilschnur umfasst, die wenigstens auf der im eingebauten Zustand zum Inneren zeigenden Hauptfläche der Glasscheibe befestigt ist und auf wenigstens einem Teil der Öffnung aufliegt, wobei der nach dem Einbau sichtbare Zwischenraum zwischen der Öffnung und der Kante der Verglasung kleiner als 5 mm ist und die Profilschnur auf wenigstens einem Teil ihrer Länge eine Lippe umfasst, die von dem Rand der Verglasung vorsteht, **dadurch gekennzeichnet, dass** diese Lippe auf wenigsten zwei Seiten der Verglasung, um als Zentrierwerkzeug für die ordnungsgemäße Positionierung der Verglasung in der Karosserieöffnung zu dienen, aber nicht auf dem unteren Teil der Verglasung, nachdem diese eingebaut ist, vorgesehen ist.

2. Verwendung einer Verglasung nach Anspruch 1, **dadurch gekennzeichnet, dass** von der Profilschnur die seitliche Ausdehnung einer Klebstoffraupe begrenzt wird.

3. Verwendung einer Verglasung nach Anspruch 1 oder 2, **dadurch gekennzeichnet, dass** die Profilschnur wenigstens zeitweise mit einer Klebstoffraupe bedeckt ist.

4. Verwendung einer Verglasung nach Anspruch 3, **dadurch gekennzeichnet, dass** die Profilschnur in Bezug auf die Ebene der Verglasung in dem Bereich, in welchem diese Schnur befestigt ist, eine Neigung aufweist.

5. Verwendung einer Verglasung nach Anspruch 3 oder 4, **dadurch gekennzeichnet, dass** die Profilschnur Befestigungsvorsprünge umfasst.

6. Verwendung einer Verglasung nach einem der vorhergehenden Ansprüche, **dadurch gekennzeichnet, dass** in die Klebstoffraupe oder die Profilschnur ein fester Draht eingebaut ist, der erforderlichenfalls als Schneiddraht dient.

7. Verwendung einer Verglasung nach Anspruch 6, **dadurch gekennzeichnet, dass** mindestens zwei Schneidedrähte in der Klebstoffraupe oder der Profilschnur eingebaut sind.

8. Verwendung einer Verglasung nach einem der vorhergehenden Ansprüche, **dadurch gekennzeichnet, dass** in die Klebstoffraupe oder die Profilschnur mindestens eine Hülle eingebaut ist.

9. Verwendung einer Verglasung nach einem der vorhergehenden Ansprüche, **dadurch gekennzeichnet, dass** die Profilschnur aus einem Zweikomponentenmaterial hergestellt ist.

10. Verwendung einer Verglasung nach einem der Ansprüche 1 bis 8, **dadurch gekennzeichnet, dass** die Profilschnur aus einem thermoplastischen Material hergestellt ist.

11. Verwendung einer Verglasung nach einem der vorhergehenden Ansprüche, **dadurch gekennzeichnet, dass** die Profilschnur direkt durch Extrudieren auf die Oberfläche der Glasscheibe erhalten worden ist.

12. Verwendung einer Verglasung nach einem der vorhergehenden Ansprüche, **dadurch gekennzeichnet, dass** Profilschnur und Klebstoffraupe direkt auf die Glasscheibe coextrudiert worden sind, und dass mindestens die Klebstoffraupe bis zum Einbau der Verglasung in die Karosserieöffnung klebfähig und plastisch verformbar bleibt.

13. Verwendung einer Verglasung nach einem der Ansprüche 1 bis 10, **dadurch gekennzeichnet, dass** die Profilschnur vorgefertigt und später auch die Glasscheibe, beispielsweise durch Verkleben, befestigt worden ist.

14. Verwendung einer Verglasung nach einem der Ansprüche 1 bis 10, **dadurch gekennzeichnet, dass** die Profilschnur durch ein Umkapselungsverfahren erhalten worden ist.

15. Verglasung, die durch Kleben in einer Karosserieöffnung befestigt und mit der Karosserie bündig abschließend angeordnet ist, wobei zwischen der Verglasung und der Karosserie nur ein sichtbarer Zwischenraum von kleiner als 5 Millimeter übrig bleibt, und welche eine Glasscheibe mit einer Profilschnur umfasst, die wenigstens auf der im eingebauten Zustand zum Inneren zeigenden Hauptfläche der Glasscheibe befestigt ist, wobei die Profilschnur auf wenigstens einem Teil ihrer Länge eine von dem Rand der Verglasung vorstehende Lippe umfasst, **dadurch gekennzeichnet, dass** diese Lippe auf wenigstens zwei Seiten der Verglasung, als Zentrierwerkerzeug für die ordnungsgemäße Positionierung der Verglasung in der Karosserieöffnung zu dienen, aber nicht auf dem unteren Teil der Verglasung, nachdem diese eingebaut ist, vorgesehen ist.

16. Verglasung nach Anspruch 15, **dadurch gekennzeichnet, dass** die Profilschnur zur Befestigung der Verglasung mit einer Klebstoffschnur zusammenwirkt, wobei Schnur und Raupe übereinander angeordnet sind und sich teilweise überlappen oder aneinander angrenzend sind.

17. Verglasung nach Anspruch 15 oder 16, **dadurch gekennzeichnet, dass** die Profilschnur wenigstens einen Teil umfasst, der in diesem Bereich eine zur Ebene der Verglasung im Wesentlichen senkrechte Ausrichtung besitzt, um die seitliche Ausdehnung einer Klebstoffschnur zu begrenzen.

18. Verglasung nach einem der Ansprüche 15 bis 17, **dadurch gekennzeichnet, dass** die Profilschnur vorgesehen ist, um wenigstens teilweise mit einer Klebstoffraupe bedeckt zu werden.

19. Verglasung nach Anspruch 18, **dadurch gekennzeichnet, dass** die Profilschnur in Bezug auf die Ebene der Verglasung in dem Bereich, in welchem diese Schnur befestigt ist, eine Neigung aufweist.

20. Verglasung nach Anspruch 18 oder 19, **dadurch gekennzeichnet, dass** die Profilschnur Befestigungsvorsprünge umfasst.

21. Verglasung nach einem der Ansprüche 15 bis 20, **dadurch gekennzeichnet, dass** in wenigstens einem Teil des Profils auf mindestens einer Seite der Verglasung die Lippe eine derartige Steifigkeit besitzt, dass sie eine Reaktionskraft gegenüber der Karosserieöffnung während des Einbaus der Verglasung in diese Öffnung ausüben kann.

22. Verglasung nach einem der Ansprüche 15 bis 21, **dadurch gekennzeichnet, dass** ein fester Draht in oder auf der Profilschnur eingebaut ist und erforderlichenfalls als Schneiddraht dient.

23. Verglasung nach Anspruch 22, **dadurch gekennzeichnet, dass** mindestens zwei Schneiddrähte in oder auf der Profilschnur eingebaut sind.

24. Verglasung nach einem der Ansprüche 15 bis 23, **dadurch gekennzeichnet, dass** in oder auf der Profilschnur mindestens eine Hülle eingebaut ist.

25. Verglasung nach einem der Ansprüche 15 bis 24, **dadurch gekennzeichnet, dass** die Profilschnur aus einem Zweikomponentenmaterial hergestellt ist.

26. Verglasung nach einem der Ansprüche 15 bis 24, **dadurch gekennzeichnet, dass** die Profilschnur aus einem thermoplastischen Material hergestellt ist.

27. Verglasung nach einem der Ansprüche 15 bis 26, **dadurch gekennzeichnet, dass** die Profilschnur direkt durch Extrudieren auf die Oberfläche der Glasscheibe erhalten worden ist.

28. Verglasung nach einem der Ansprüche 15 bis 27, **dadurch gekennzeichnet, dass** die Profilschnur und eine Klebstoffraupe direkt auf die Glasscheibe coextrudiert worden sind, und dass wenigstens die Klebstoffraupe haftfähig und plastisch verformbar bis zum Einbau der Verglasung in die Karosserieöffnung bleibt.

29. Verglasung nach einem der Ansprüche 15 bis 26, **dadurch gekennzeichnet, dass** die Profilschnur vorgefertigt und, beispielsweise durch Kleben, später auf der Glasscheibe befestigt worden ist.

30. Verglasung nach einem der Ansprüche 15 bis 26, **dadurch gekennzeichnet, dass** die Profilschnur durch ein Umkapselungsverfahren erhalten worden ist.
